# EUROPEAN PATENT SPECIFICATION

(11) **EP 3 804 374 B1**
(45) Date of publication and mention of the grant of the patent: **06.04.2022**
(21) Application number: 19821934.7
(22) Date of filing: 12.06.2019
(51) Int. Cl.: H04W 12/00, H04W 76/27

(54) **METHOD AND APPARATUS FOR SECURITY ALGORITHM NEGOTIATION**
VERFAHREN UND VORRICHTUNG ZUR AUSHANDLUNG EINES SICHERHEITSALGORITHMUS
PROCÉDÉ ET APPAREIL DE NÉGOCIATION D'ALGORITHME DE SÉCURITÉ

(30) Priority: 21.06.2018 US 201862687810 P
(43) Date of publication of application: 14.04.2021
(73) Proprietor: HUAWEI TECHNOLOGIES CO., LTD., Shenzhen, Guangdong 518129 (CN)
(72) Inventor: HU, Li, Shenzhen, Guangdong 518129 (CN); MUHANNA, Ahmad Shawky, Plano, Texas 75024 (US); GENG, Tingting, Shenzhen, Guangdong 518129 (CN); CHEN, Jing, Shenzhen, Guangdong 518129 (CN)
(74) Representative: Körber, Martin Hans
(86) International application number: PCT/CN2019/090860
(87) International publication number: WO 2019/242545

(56) References cited:
- WO-A1-2018/028650
- WO-A1-2018/079692
- CN-A- 102 238 668
- HUAWEI ET AL: "Security Negotiation for RRC INACTIVE", 3GPP DRAFT; S3-181693-SECURITY NEGOTIATION FOR RRC INACTIVE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. La Jolla (US); 20180521 - 20180525 14 May 2018 (2018-05-14), XP051540449, Retrieved from the Internet: URL:http://www.3gpp.org/ftp/tsg%5Fsa/WG3%5 FSecurity/TSGS3%5F91Bis%5FLaJolla/Docs/S3% 2D181693%2Ezip [retrieved on 2018-05-14]
- HUAWEI ET AL: "Key handling at RRC-INACTIVE state transitions", 3GPP DRAFT; 33501_CR0184R1_(REL-15)_S3-182060-KEY HANDLING AT RRC STATE TRANSITIONS, 3RD GENERATION PARTNERSHIP PROJECT (3GPP), MOBILE COMPETENCE CENTRE ; 650, ROUTE DES LUCIOLES ; F-06921 SOPHIA-ANTI , vol. SA WG3, no. La Jolla (US); 20180521 - 20180525 10 June 2018 (2018-06-10), XP051458578, Retrieved from the Internet: URL:http://www.3gpp.org/ftp/Meetings%5F3GP P%5FSYNC/SA/Docs [retrieved on 2018-06-10]
- HUAWEI ET AL: "Discussion on security algorithm negotiation issue for Resume, RNAU and Reestablishment", 3GPP DRAFT; R2-1814135, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Chengdu, China; 20181008 - 20181012 28 September 2018 (2018-09-28), XP051523594, Retrieved from the Internet: URL:http://www.3gpp.org/ftp/tsg%5Fran/WG2% 5FRL2/TSGR2%5F103bis/Docs/R2%2D1814135%2Ez ip [retrieved on 2018-09-28]
- "3rd Generation Partnership Project; Technical Specification Group Services and System Aspects; Security architecture and procedures for 5G System( Release 15)", 3GPP TS 33.501, no. V15.0.0, 26 March 2018 (2018-03-26), XP051450501,

## Description

### TECHNICAL FIELD

Embodiments of the present disclosure relate to the field of wireless communication technologies, and more specifically, to a method and apparatus for negotiating security algorithms.

### BACKGROUND

For mobility network, a user equipment device or terminal device (collectively referred to as UE hereinafter) has mobility requirements. For example in long term evolution (LTE) or fourth generation (4G) communication systems, the UE may trigger a resume procedure, in the fifth generation (5G) communication systems, the UE may trigger a procedure from an INACTIVE to CONNECTED state. The UE may move from a source base station (the base station can be an eNB or a gNB) to a target base station (eNB/gNB) when triggering these procedures. Thus, the source eNB/gNB will have to send the UE's context to the target eNB/gNB. The UE's context includes old cipher and integrity protection algorithms used between the UE and the source eNB/gNB.

Different eNB/gNB may configure different algorithm priority list, or may not support the old algorithms. Thus, when the UE moves from a source eNB/gNB to a target eNB/gNB, the target eNB/gNB may not reuse the old algorithm, and should negotiate the new algorithm with the UE. However, for resume or INACTIVE to CONNECTED procedure, the message sent by the target gNB should be ciphered, that means the UE could not know the selected algorithms if the message is ciphered by the selected algorithm, because the UE could not decipher the message, and get the selected algorithm.

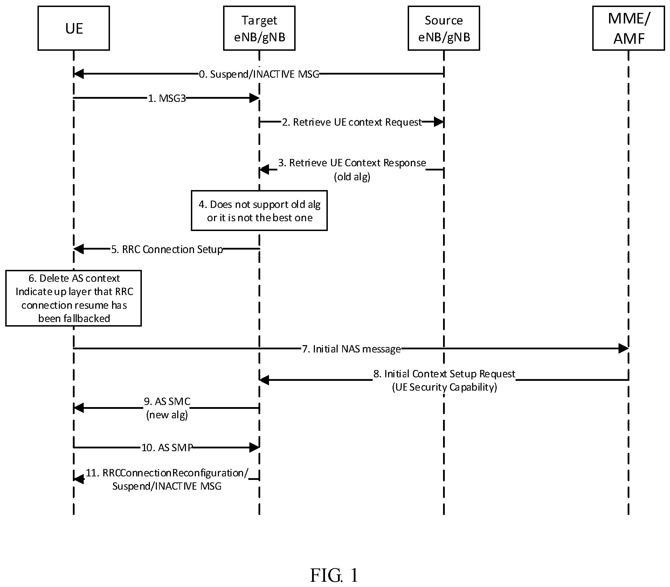

The current solution is to send the UE to an IDLE state, and require a NAS recovery. Referring to Fig.1, the current solution includes:
0. Source eNB/gNB decides to suspend the UE (send the RRCConnectionRelease message with suspend cause to the UE, for 4G), or send the UE to INACTIVE (send the RRCConnectionInactive message to the UE, for 5G).
1. The UE sends MSG3 (RRCConnectionResumeRequest message) to the target eNB/gNB to trigger resume procedure or INACTIVE to CONNECTED procedure to resume RRC connection.
2. The target eNB/gNB sends Retrieve UE Context Request message to the source eNB/gNB to fetch UE context.
3. The source eNB/gNB sends Retrieve UE Context Response message to the target eNB/gNB to response the message above. The Retreive UE Context Response may include UE security capability and old ciphering and integrity algorithms used between UE and source eNB/gNB.
4. If the target eNB/gNB could not support old algorithms or if the target eNB/gNB prefers to use different algorithms,
5. The target eNB/gNB sends RRC Connection Setup message to the UE to proceed with RRC connection establishment as if the UE was in RRC_IDLE (fallback procedure).
6. The UE discards the stored UE AS context and indicates to upper layers that the RRC connection resume has been fallbacked.
7. The UE sends initial NAS message (e.g. Service Request message) to the MME/AMF.
8. The MME/AMF derives KeNB/KgNB according to current Kasme/Kamf and uplink NAS COUNT indicated by initial NAS message, and sends the KeNB/KgNB and UE security capability in Initial Context Setup Request message to the target eNB/gNB.
9. The target eNB/gNB chooses the new ciphering and integrity algorithm which has the highest priority from its configured algorithm priority list and is also present in the UE security capability. The chosen algorithms are indicated to the UE in the access stratum security mode command (AS SMC). The target eNB/gNB derives Krrc-int according to the KeNB/KgNB and new integrity algorithm. The AS SMC is integrity protected by Krrc-int and new integrity algorithm. Note that the UE could get the new algorithms in AS SMC, because it is not ciphered.
10. The UE derives KeNB/KgNB according to current Kasme/Kamf and uplink NAS COUNT indicated by initial NAS message, and derives Krrc-int and Krrc-enc according to KeNB/KgNB and new integrity and ciphering algorithms indicated in AS SMC. The UE verifies AS SMC message according Krrc-int and new integrity algorithm. After successful verification, the UE may cipher and integrity protect the AS SMP message using Krrc-enc, Krrc-int, new ciphering and integrity algorithm. The UE sends the AS SMP message to the target gNB. Thus, UE and target gNB have successfully negotiate the security algorithm.
11. The target gNB may send RRCConnectionReconfiguartion message to the UE to configurate the DRB. The target gNB may suspend the UE (send the RRCConnectionRelease message with suspend cause to the UE, for 4G), or send the UE to INACTIVE (send the RRCConnectionInactive message to the UE, for 5G).

Thus, according to figure 1, the UE will be fallback to the IDLE state. However, such a procedure costs too much signalling overhead. HUAWEI ET AL, "Security Negotiation for RRC INACTIVE", vol. SA WG3, no. La Jolla (US); 20180521 - 20180525, 3GPP DRAFT; S3-181693-SECURITY NEGOTIATION FOR RRC INACTIVE, 3RD GENERATION PARTNERSHIP PROJECT (3GPP), discusses transitions from RRC-INACTIVE to RRC-CONNECTED states. HUAWEI ET AL, "Key handling at RRC-INACTIVE state transitions", vol. SA WG3, no. La Jolla (US); 20180521 - 20180525, 3GPP DRAFT; 33501_CR0184R1_(REL-15)_S3-182060-KEY HANDLING AT RRC STATE TRANSITIONS, 3RD GENERATION PARTNERSHIP PROJECT (3GPP), discusses state transition from RRC-INACTIVE to RRC-CONNECTED to a new gNB.

### SUMMARY

The invention is defined by the appended claims. Embodiments of the present disclosure provide a method for negotiating security method according to independent claim 1 or 7, a UE according to independent claim 10, and a base station according to independent claim 14, which can reduce the signaling overhead. Additional features of the disclosure are provided in the dependent claims. In the following, parts of the description and drawings referring to embodiments which are not covered by the claims are not presented as embodiments of the disclosure, but as examples useful for understanding the disclosure.

According to a first aspect, a security algorithm negotiation method is provided. The method comprises receiving, by a user equipment (UE), a first request message from a target base station; reserving, by the UE, a first key which is derived for a source base station in response to the first request message; receiving, by the UE, a second request message from a target base station, wherein the second request message comprise a identity which is used to indicate an algorithm; deriving, by the UE, a second key based on the first key and an algorithm corresponding to the identity.

It is necessary to be pointed out that if a target base station fails to support an old algorithm of the UE and the source base station, normally, the target base station will send an RRC Connection Setup message to the UE to proceed with RRC connection establishment as if the UE was in RRC_IDLE (fallback procedure), and then the steps (6-11) described in the background will be performed. Apparently, the steps (6-11) will cost several signaling. While in the present disclosure, in order to reduce the signaling, the UE will take use of the first key and an algorithm from the target base station to derive secret keys for communicating with the target base station. Because the first key was stored in the UE, so reusing the first key will achieve the goal.

Optionally, when the UE receives a first request message, the UE will send a first response message to the target base station in response to the first request message. In addition, after deriving the second key, the UE will verify the second request message, protect a second response message base on the second key and the algorithm corresponding to the identity when the second request message is verified successfully; and send the protected second response message to the target base station. Specially, the first request message can be a RRC Connection Setup message, the first response message can be a RRC Connection Setup Complete message, the second request message can be an AS SMC message, and the second response message can be an AS SMP message.

With reference to the first aspect, it should be pointed out that the first request message comprises a first indicator. The UE can delete security keys which are derived from the first key based on the first indicator and in order to reduce the signaling, the UE will not trigger Non-access stratum recovery process based on the first indicator. Optionally, in another possible manner, the UE will not trigger Non-access stratum recovery process in response to the first request message.

With reference to the first aspect, because of reusing the first key, the UE will not deriving a key for the target base station based on the second indicator included in the second request message.

With reference to the first aspect, in a first possible implementation manner of the first aspect, the performing rotation processing on a preset precoding matrix includes obtaining indication information, where the indication information is used to instruct a base station to perform the rotation processing on the preset precoding matrix; and performing the rotation processing on the preset precoding matrix according to the indication information.

According to a second aspect, a security algorithm negotiation method is provided. The method comprises: sending, by a target base station, a first request message from a user equipment (UE); wherein the first request message is used to indicate the UE to reserve a first key which is derived for a source base station; sending, by the target base station, a second request message to the UE; wherein the second request message comprises an identity which is used to indicate an algorithm; and receiving, by the target base station, a second response message from the UE.

Optionally, the target base station will receive a first response message. Specially, the first request message can be a RRC Connection Setup message, the first response message can be a RRC Connection Setup Complete message, the second request message can be an AS SMC message, and the second response message can be an AS SMP message.

Further, it is necessary to be pointed out that, in order to reduce signaling, the target base station will indicate the UE to reuse the first key (that is, just keep the first key, and no need to derive a key for the target base station). Optionally, the target base station will indicate the UE to delete security keys which are derived from the first key, optionally the target base station may indicate the UE not to trigger Non-access stratum recovery process.

According to a third aspect, the present disclosure provides a structure of user equipment including a processor, a memory, a receiver circuit, and a transmitter circuit. The processor, the memory, and the receiver circuit are connected using a bus system. The user equipment may be configured to implement steps and methods in the first aspect.

According to a fourth aspect, the present disclosure provides a structure of a base station. The base station includes a processor, a memory a receiver circuit, and a transmitter circuit. The processor, the memory, and the receiver circuit are connected using a bus system. The base station may be configured to implement steps and methods in the second aspect.

According to a fifth aspect, the present disclosure provides a memory. The memory may provide an instruction and data for a processor. When the instruction was executed, the processor will perform the method in the first aspect or in the second aspect.

In the embodiments of the present disclosure, the first key is kept and reused in the process of deriving a key for a target base station. A purpose of reducing several signaling is achieved.

### BRIEF DESCRIPTION OF DRAWINGS

The following briefly describes the accompanying drawings used in describing the embodiments. The accompanying drawings in the following description show merely some embodiments of the present disclosure, and a person of ordinary skill in the art may still derive other drawings from these accompanying drawings without creative efforts.
FIG 1 is a schematic flowchart of a security algorithm negotiation method in conventional art;
FIG 2 is a schematic flowchart of a security algorithm negotiation method according to embodiment 1 of the present disclosure;
FIG 3 is a schematic flowchart of a security algorithm negotiation method according embodiment 2 of the present disclosure;
FIG 4 is a schematic flowchart of a security algorithm negotiation method according embodiment 3 of the present disclosure;
FIG 5 is a schematic flowchart of a security algorithm negotiation method according embodiment 4 of the present disclosure;
FIG 6 is a simplified block diagram of a base station according to an embodiment of the present disclosure; and
FIG 7 is a simplified block diagram of a user equipment device according to an embodiment of the present disclosure.

### DETAILED DESCRIPTION OF EMBODIMENTS

The following describes the technical solutions in the embodiments of the present disclosure with reference to the accompanying drawings.

It should be understood that, user equipment (UE) mentioned in the embodiments of the present disclosure may be referred to as a mobile terminal (MT), mobile user equipment, and the like, and may communicate with one or more core networks using a radio access network (RAN). The user equipment may be a mobile terminal, such as a mobile phone (which is also referred to as a "cellular" phone) and a computer with a mobile terminal. For example, the user equipment may be a portable, pocket-sized, hand-held, computer built-in, or in-vehicle mobile apparatus.

A base station may be a base station (NodeB) in WCDMA, or may further be an evolved NodeB (eNB or e-NodeB for short) in LTE, or may further be a New Radio NodeB (gNodeB) in 5G This is not limited in the present disclosure.

There are four embodiments in the present disclosure. Further, the related explanation of the words can refer to Embodiment 1.

### Embodiment 1

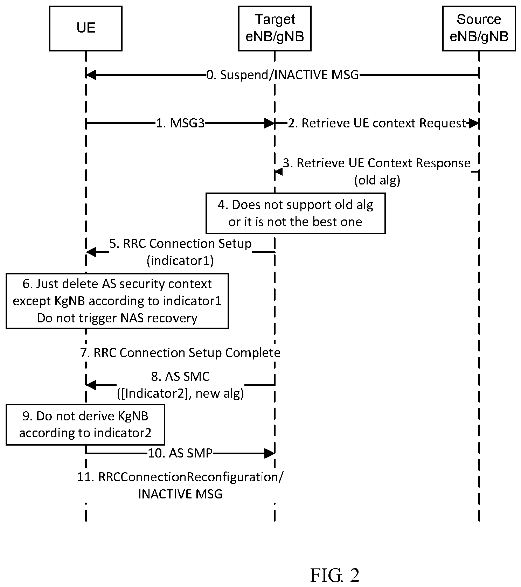

Referring to FIG 2, in order to reduce the signaling, the target base station indicate the UE not to trigger the Non-access stratum recovery process and reuse the current KeNB/KgNB. Specially, please refer to the following steps.

0. Source eNB/gNB decides to suspend the UE (send the RRCConnectionRelease message with suspend cause to the UE, for 4G), or send the UE to INACTIVE (send the RRCConnectionInactive message to the UE, for 5G).

It is should be understood that that source base station can be a source eNB or a source gNB.

1. The UE sends MSG3 (RRCConnectionResumeRequest message) to the target eNB/gNB to trigger resume procedure or INACTIVE to CONNECTED procedure to resume RRC connection.

It is should be understood that that target base station can be a target eNB or a target gNB.

2. The target eNB/gNB sends Retreive UE Context Request message to the source eNB/gNB to fetch UE context.

3. The source eNB/gNB sends Retreive UE Context Response message to the source eNB/gNB to response the message above. The Retreive UE Context Response may include UE security capability and old ciphering and integrity algorithms used between UE and source eNB/gNB.

4. If the target eNB/gNB could not support old algorithms or if the target eNB/gNB prefers to use different algorithms or if the old algorithm is not the best one, the target eNB/gNB send RRC Connection Setup message to the UE.

5. RRC connection setup. There are three possible ways.

Option 1: The target eNB/gNB sends RRC Connection Setup message to the UE. The RRC Connection Setup message includes NoNASRecovery indicator.

Option 2: The target eNB/gNB sends RRC Connection Setup message to the UE. The RRC Connection Setup message includes NASRecovery indicator.

Option 3: The target eNB/gNB sends RRC Connection Setup without NAS Recovery message to the UE.

6. There are three possible solutions.

Option 1: When the NoNASRecovery indicator is included or NoNASRecovery is set to TRUE, the UE does not indicate to upper layers that the RRC connection resume has been fallbacked. The UE also keep the current KeNB/KgNB. The UE could optionally discard the keys derived from the current KeNB/KgNB (Krrc-int, Krrc-enc, Kup-int and Kup-enc (if exists) ) stored in UE AS security context. Otherwise, the UE discards the stored UE AS context and indicates to upper layers that the RRC connection resume has been fallbacked.

It is necessary to point out that the Krrc-enc is used for radio resource control (RRC) ciphering protection, the Krrc-int is used for RRC integrity protection, the Kup-int is used for user plane (UP) integrity protection and Kup-enc is used for UP ciphering protection.

Option 2: When the NASRecovery indicator is included or NASRecovery is set to TRUE, the UE discards the stored UE AS context and indicates to upper layers that the RRC connection resume has been fallbacked. Otherwise, the UE does not indicate to upper layers that the RRC connection resume has been fallbacked, the UE also keep the current KeNB/KgNB, the UE could optionally discard the Krrc-int, Krrc-enc, Kup-int (if exists), and Kup-enc (if exists) stored in UE AS security context.

Option 3: When the UE receives RRC Connection Setup without NAS Recovery message from target eNB/gNB, the UE does not indicate to upper layers that the RRC connection resume has been fallbacked. The UE also keeps the current KeNB/KgNB. The UE could optionally discard the Krrc-int, Krrc-enc, Kup-int (if exists), and Kup-enc (if exists) stored in UE AS security context.

7. (Optional) The UE sends RRC Connection Setup Complete message to the target eNB/gNB.

8. The target eNB/gNB chooses the new ciphering and integrity algorithm which has the highest priority from its configured algorithm priority list and is also present in the UE security capability, which can be received from source eNB/gNB. The chosen algorithms are indicated to the UE in RRC message. The target eNB/gNB derives Krrc-int according to the KeNB/KgNB and new integrity algorithm. The RRC message is integrity protected by Krrc-int and new integrity algorithm.

There are four possible manners to perform the step 8.

Option 1: the RRC message is AS SMC, and does not include any indicator.

Option 2: the RRC message is AS SMC, and includes NoRootKeyDerivation indicator.

Option 3: the RRC message is AS SMC, and includes RootKeyDerivation indicator.

Option 4: the RRC message is AS SMC without Root Key Derivation.

9. There are four possible manner in response to the step 8.

Option 1: If NoNASRecovery indicator is included or NoNASRecovery is set to TRUE or if NASRecovery indicator is not included or NASRecovery is set to False, or if the UE receives RRC Connection Setup without NAS Recovery message, the UE does not derive a new KeNB/KgNB.

Option 2: If NoRootKeyDerivation indicator is included or NoRootKeyDerivation is set to TRUE, the UE does not derive a new KeNB/KgNB. Otherwise, the UE derives a new KeNB/KgNB.

Option 3: If RootKeyDerivation indicator is not included or RootKeyDerivation is set to FALSE, the UE does not derive a new KeNB/KgNB. Otherwise, the UE derives a new KeNB/KgNB.

Option 4: if the UE receives AS SMC without Root Key Derivation message, the UE does not derive a new KeNB/KgNB.

The UE derives Krrc-int and Krrc-enc according to current KeNB/KgNB and new integrity and ciphering algorithms indicated in AS SMC. The UE verifies AS SMC message according Krrc-int and new integrity algorithm.

10. After successful verification, the UE may cipher and integrity protect the AS SMP message using Krrc-enc, Krrc-int, new ciphering and integrity algorithm. The UE sends the AS SMP message to the target gNB. Thus, UE and target gNB have successfully negotiate the security algorithm.

11. The target gNB may send RRCConnectionReconfiguartion message to the UE to configurate the DRB. The target gNB may suspend the UE (send the RRCConnectionRelease message with suspend cause to the UE, for 4G), or send the UE to INACTIVE (send the RRCConnectionInactive message to the UE, for 5G).

Compared to current solution, this embodiment 1 adds new indicator in the current RRC message or involves new RRC message to tell the UE does not perform NAS recovery, and that will reduce some signaling.

### Embodiment 2

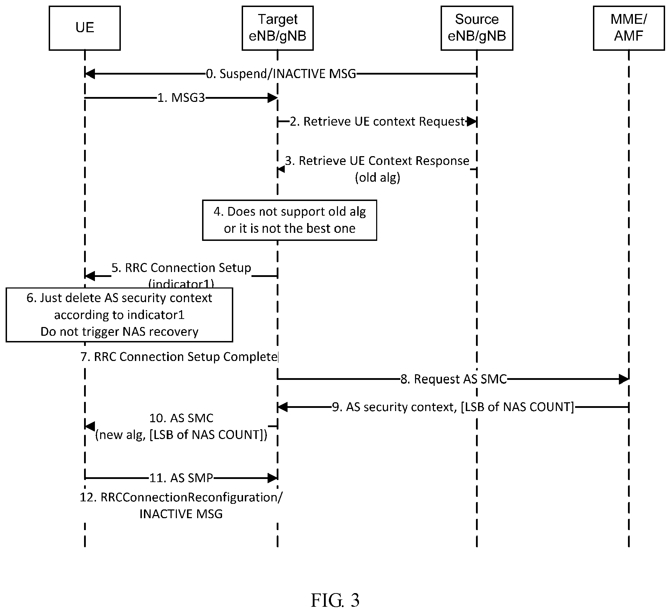

Referring to FIG 3, in order to reduce the signaling, the target base station indicate the UE to reuse the AS security context (e.g. Kasme/Kamf), and derive a new key for the target base station base on the AS security context and non-access stratum (NAS) count. Specially, please refer to the following steps.

0. Source eNB/gNB decides to suspend the UE (send the RRCConnectionRelease message with suspend cause to the UE, for 4G), or send the UE to INACTIVE (send the RRCConnectionInactive message to the UE, for 5G).

1. The UE sends MSG3 (RRCConnectionResumeRequest message) to the target eNB/gNB to trigger resume procedure or INACTIVE to CONNECTED procedure to resume RRC connection.

2. The target eNB/gNB sends Retreive UE Context Request message to the source eNB/gNB to fetch UE context.

3. The source eNB/gNB sends Retreive UE Context Response message to the source eNB/gNB to response the message above. The Retreive UE Context Response may include UE security capability and old ciphering and integrity algorithms used between UE and source eNB/gNB.

4. If the target eNB/gNB could not support old algorithms or if the target eNB/gNB prefers to use different algorithms, target eNB/gNB send a RRC Connection Setup message.

5. There are three possible manners in sending RRC Connection Setup message.

Option 1: The target eNB/gNB sends RRC Connection Setup message to the UE. The RRC Connection Setup message includes NoNASRecovery indicator.

Option 2: The target eNB/gNB sends RRC Connection Setup message to the UE. The RRC Connection Setup message includes NASRecovery indicator.

Option 3: The target eNB/gNB sends RRC Connection Setup without NAS Recovery message to the UE.

6. Corresponding to the step 5, there are three solutions.

Option 1: When the NoNASRecovery indicator is included or NoNASRecovery is set to TRUE, the UE does not indicate to upper layers that the RRC connection resume has been fallbacked, the UE keeps the current AS context, the UE could optionally discard the KgNB, Krrc-int, Krrc-enc, Kup-int (if exists), and Kup-enc (if exists) stored in UE AS context. Otherwise, the UE discards the stored UE AS context and indicates to upper layers that the RRC connection resume has been fallbacked.

Option 2: When the NASRecovery indicator is included or NASRecovery is set to TRUE, the UE discards the stored UE AS context and indicates to upper layers that the RRC connection resume has been fallbacked. Otherwise, the UE does not indicate to upper layers that the RRC connection resume has been fallbacked, the UE keeps the current AS context, the UE could optionally discard the KgNB, Krrc-int, Krrc-enc, Kup-int (if exists), and Kup-enc (if exists) stored in UE AS context.

Option 3: When the UE receives RRC Connection Setup without NAS Recovery message from target eNB/gNB, the UE does not indicate to upper layers that the RRC connection resume has been fallbacked. The UE keeps the current AS context (e.g. Kasme/Kamf), the UE could optionally discard the KgNB, Krrc-int, Krrc-enc, Kup-int (if exists), and Kup-enc (if exists) stored in UE AS context.

It should be pointed out that the Kasme is a key in the 4G system, and the Kamf is a key in the 5G system.

7. (Optional) The UE sends RRC Connection Setup Complete message to the target eNB/gNB.

8. The target eNB/gNB decides to send S1/N2 message to the MME/AMF to request UE context.

9. The mobility management entity (MME)/ Access and Mobility Management Function (AMF) derives KeNB/KgNB according to current Kasme/Kamf and current uplink NAS COUNT, and sends the KeNB/KgNB and UE security capability to the target eNB/gNB. Optionally, the MME/AMF may send the NAS COUNT or least significant bit (LSB) of NAS COUNT to the target eNB/gNB.

10. The target eNB/gNB chooses the new ciphering and integrity algorithm which has the highest priority from its configured algorithm priority list and is also present in the UE security capability. The chosen algorithms are indicated to the UE in the AS SMC. The target eNB/gNB derives Krrc-int according to the KeNB/KgNB and new integrity algorithm. The AS SMC is integrity protected by Krrc-int and new integrity algorithm. Note that the UE could get the new algorithms in AS SMC, because it is not ciphered. Optionally, the target eNB/gNB may include the NAS COUNT or LSB of NAS COUNT in AS SMC.

11. The UE derives KeNB/KgNB according to current Kasme/Kamf and current uplink NAS COUNT (Optionally, the UE may get NAS COUNT according to NAS COUNT or LSB of NAS COUNT in AS SMC), and derives Krrc-int and Krrc-enc according to KeNB/KgNB and new integrity and ciphering algorithms indicated in AS SMC. The UE verifies AS SMC message according Krrc-int and new integrity algorithm. After successful verification, the UE may cipher and integrity protect the AS SMP message using Krrc-enc, Krrc-int, new ciphering and integrity algorithm. The UE sends the AS SMP message to the target gNB. Thus, UE and target gNB have successfully negotiate the security algorithm.

12. The target gNB may send RRCConnectionReconfiguartion message to the UE to configurate the DRB. The target gNB may suspend the UE (send the RRCConnectionRelease message with suspend cause to the UE, for 4G), or send the UE to INACTIVE (send the RRCConnectionInactive message to the UE, for 5G).

Compared to the current solution, this embodiment 2 adds new indicator in the current RRC message or involves new RRC message to tell the UE to reuse the AS context, and that will reduce NAS signaling.

### Embodiment 3

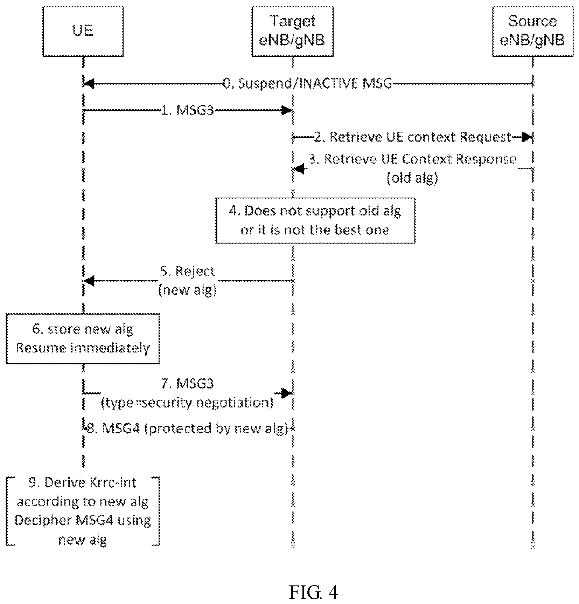

Referring to FIG 4, the method according to this embodiment of the present disclosure includes the following steps.

0. Source eNB/gNB decides to suspend the UE (send the RRCConnectionRelease message with suspend cause to the UE, for 4G), or send the UE to INACTIVE (send the RRCConnectionInactive message to the UE, for 5G).

1. The UE sends MSG3 (RRCConnectionResumeRequest message) to the target eNB/gNB to trigger resume procedure or INACTIVE to CONNECTED procedure to resume RRC connection.

2. The target eNB/gNB sends Retreive UE Context Request message to the source eNB/gNB to fetch UE context.

3. The source eNB/gNB sends Retreive UE Context Response message to the source eNB/gNB to response the message above. The Retreive UE Context Response may include UE security capability and old ciphering and integrity algorithms used between UE and source eNB/gNB.

4. If the target eNB/gNB could not support old algorithms or if the target eNB/gNB prefers to use different algorithms, the target eNB/gNB chooses the new ciphering and integrity algorithm which has the highest priority from its configured algorithm priority list and is also present in the UE security capability.

5. Target gNB/eNB sends RRCConnectionReject message to the UE. The message includes the new algorithms.

6. The UE stores new algorithms, and sends MSG3 again immediately if new algorithms are included.

7. The UE sends MSG3 to the target eNB/gNB. Optionally, the MSG3 could include new resume cause, e.g. security negotiation complete.

8. Option 1: When target eNB/gNB sends RRCConnectionReject message to the UE, the target eNB/gNB will maintain a state for the new algorithm, e.g. 1, the target eNB/gNB start a timer, when the target eNB/gNB receives MSG3, and the timer is not expired, the target eNB/gNB uses new integrity and ciphering algorithms to protect MSG4. E.g. 2, the target eNB/gNB logs security negotiation indication in the UE context, when the target eNB/gNB receives MSG3, the target eNB/gNB uses new integrity and ciphering algorithms to protect MSG4 if there is security negotiation indicator.

Option 2: If resume cause indicates security negotiation complete, the target eNB/gNB uses new integrity and ciphering algorithms to protect MSG4.

Note that target eNB/gNB may not maintain UE context when rejecting the UE, so, the target eNB/gNB may need to perform step 2-3 again to fetch UE context. It is also possible that the target eNB/gNB maintains the UE context.

The target eNB/gNB derives Krrc-int and Krrc-enc according to the KeNB/KgNB and new integrity and ciphering algorithm. The MSG4 is integrity protected by Krrc-int and new integrity algorithm and is ciphered by Krrc-enc and new ciphering algorithm. MSG4 could be RRCConnectionResume message, RRCConnectionRelease message with suspend cause, and RRCConnectionInactive message, etc.

9. The UE derives Krrc-int and Krrc-enc according to KeNB/KgNB and stored new integrity and ciphering algorithms indicated in RRCConnectionReject message. The UE verifies and deciphers MSG4 according Krrc-int, Krrc-enc and new integrity and ciphering algorithm.

Compared to the current solution, this embodiment 3 adds new algorithms in the RRCConnectionReject message to tell the UE the new algorithm, and that will reduce AS signalling (3 RRC), NAS signalling (1 NAS), and S1/N2 signalling (2 S1/N2).

### Embodiment 4

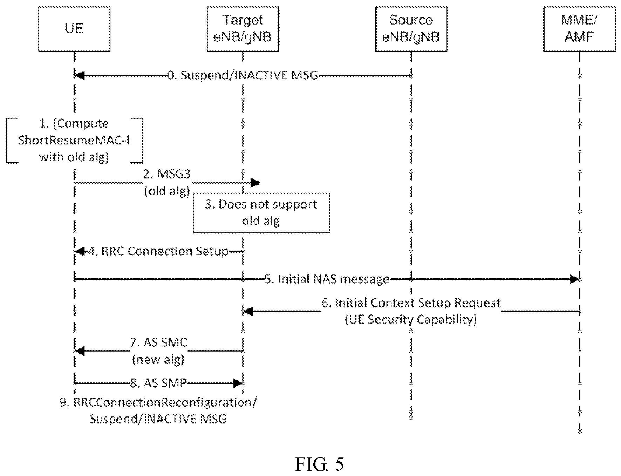

Referring to FIG 5, the method according to this embodiment of the present disclosure includes the following steps.

0. Source eNB/gNB decides to suspend the UE (send the RRCConnectionRelease message with suspend cause to the UE, for 4G), or send the UE to INACTIVE (send the RRCConnectionInactive message to the UE, for 5G).

1. Optionally, the UE could compute shortResumeMAC-I according to old algorithms. Other inputs may be needed, i.e. source physical cell identifier (PCI), source cell radio network temporary identifier (C-RNTI), target cell ID.

2. The UE sends MSG3 (RRCConnectionResumeRequest message) to the target eNB/gNB to trigger resume procedure or INACTIVE to CONNECTED procedure to resume RRC connection. The old algorithms are included in MSG3.

3. If the target eNB/gNB could not support the old algorithms,

4. The target eNB/gNB sends RRC Connection Setup message to the UE to proceed with RRC connection establishment as if the UE was in RRC_IDLE (fallback procedure).

5. The UE discards the stored UE AS context and indicates to upper layers that the RRC connection resume has been fallbacked. The UE sends initial NAS message (e.g. Service Request message) to the MME/AMF

6. The MME/AMF derives KeNB/KgNB according to current Kasme/Kamf and uplink NAS COUNT indicated by initial NAS message, and sends the KeNB/KgNB and UE security capability in Initial Context Setup Request message to the target eNB/gNB.

7. The target eNB/gNB chooses the new ciphering and integrity algorithm which has the highest priority from its configured algorithm priority list and is also present in the UE security capability. The chosen algorithms are indicated to the UE in the AS SMC. The target eNB/gNB derives Krrc-int according to the KeNB/KgNB and new integrity algorithm. The AS SMC is integrity protected by Krrc-int and new integrity algorithm. Note that the UE could get the new algorithms in AS SMC, because it is not ciphered.

8. The UE derives KeNB/KgNB according to current Kasme/Kamf and uplink NAS COUNT indicated by initial NAS message, and derives Krrc-int and Krrc-enc according to KeNB/KgNB and new integrity and ciphering algorithms indicated in AS SMC. The UE verifies AS SMC message according Krrc-int and new integrity algorithm. After successful verification, the UE may cipher and integrity protect the AS SMP message using Krrc-enc, Krrc-int, new ciphering and integrity algorithm. The UE sends the AS SMP message to the target gNB. Thus, UE and target gNB have successfully negotiate the security algorithm.

9. The target gNB may send RRCConnectionReconfiguartion message to the UE to configurate the DRB. The target gNB may suspend the UE (send the RRCConnectionRelease message with suspend cause to the UE, for 4G), or send the UE to INACTIVE (send the RRCConnectionInactive message to the UE, for 5G).

Compared to current solution, this embodiment 4 adds new IE in the MSG3 to tell the target eNB/gNB the old algorithm, if it is not supported by the target eNB/gNB, the target eNB/gNB will fallback UE to IDLE directly, and that will reduce several signaling.

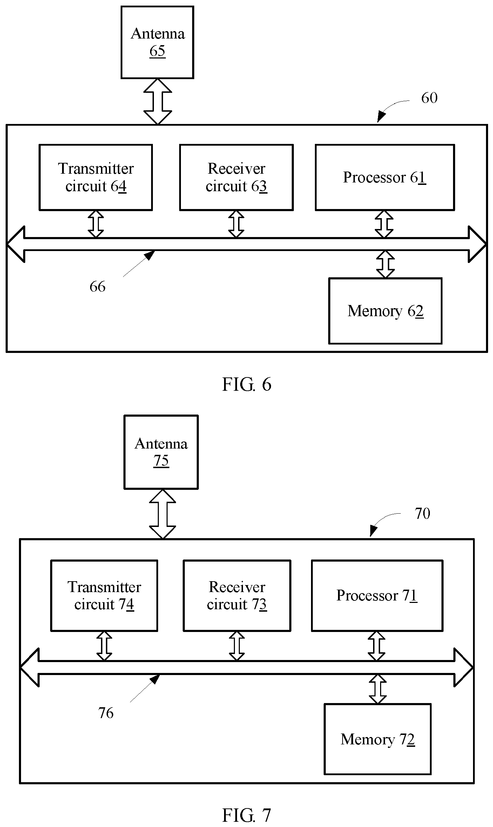

FIG 6 is a simplified block diagram of a base station according to an embodiment of the present disclosure (the structure of a target base station or a source base station that is described in any one of embodiments 1 to 4 can be referred to the FIG 6). The base station 60 in FIG 6 may be configured to implement steps and methods in the foregoing method embodiments (embodiments 1 to 4). The base station 60 in FIG 6 includes a processor 61, a memory 62, a receiver circuit 63, and a transmitter circuit 64. The processor 61, the memory 62, and the receiver circuit 63 are connected using a bus system 66.

In addition, the base station 60 may further include an antenna 65, and the like. The processor 61 controls an operation of the base station 60. The memory 62 may include a read-only memory and a random access memory, and may provide an instruction and data for the processor 61. A part of the memory 62 may further include a nonvolatile random access memory (NVRAM). In a specific application, the transmitter circuit 64 and the receiver circuit 63 may be coupled to the antenna 65. All components of the base station 60 are coupled together using the bus system 66. In addition to a data bus, the bus system 66 includes a power bus, a control bus, and a status signal bus. However, for clarity of description, various buses are marked as the bus system 66 in the figure.

The processor 61 may be an integrated circuit chip and has a signal processing capability. The foregoing processor 61 may be a general-purpose processor, a digital signal processor (DSP), an application-specific integrated circuit (ASIC), a field programmable gate array (FPGA), or another programmable logic device, a discrete gate or a transistor logic device, or a discrete hardware component, which may implement or perform the methods, the steps, and the logical block diagrams disclosed in the embodiments of the present disclosure. The general-purpose processor may be a microprocessor, or the processor may be any conventional processor, or the like. The processor 61 reads information in the memory 62, and controls all parts of the base station 60 in combination with hardware of the processor 61.

FIG 7 is a simplified block diagram of a user equipment device according to an embodiment of the present disclosure (the structure of a user equipment which is described in any one of embodiments 1 to 4 can be referred to the FIG 7). The user equipment 70 in FIG 10 may be configured to implement steps and methods in the foregoing method embodiments 1-4. The user equipment 70 in FIG 10 includes a processor 71, a memory 72, a receiver circuit 73, and a transmitter circuit 74. The processor 71, the memory 72, and the receiver circuit 73 are connected using a bus system 76.

In addition, the user equipment 70 may further include an antenna 75, and the like. The processor 71 controls an operation of the user equipment 70. The memory 72 may include a read-only memory and a random access memory, and may provide an instruction and data for the processor 71. A part of the memory 72 may further include a NVRAM. In a specific application, the transmitter circuit 74 and the receiver circuit 73 may be coupled to the antenna 75. All components of the user equipment 70 are coupled together using the bus system 76. In addition to a data bus, the bus system 76 includes a power bus, a control bus, and a status signal bus. However, for clarity of description, various buses are marked as the bus system 76 in the figure.

The processor 71 may be an integrated circuit chip and has a signal processing capability. The foregoing processor 71 may be a general-purpose processor, a DSP, an ASIC, a FPGA, or another programmable logic device, a discrete gate or a transistor logic device, or a discrete hardware component, which may implement or perform the methods, the steps, and the logical block diagrams disclosed in the embodiments of the present disclosure. The general-purpose processor may be a microprocessor, or the processor may be any conventional processor, or the like. The processor 71 reads information in the memory 72, and controls all parts of the user equipment 70 in combination with hardware of the processor 71.

It should be understood that "an embodiment" mentioned in the whole specification does not mean that particular features, structures, or features related to the embodiment are included in at least one embodiment of the present disclosure. Therefore, "in an embodiment" appearing throughout the specification does not refer to a same embodiment. In addition, these particular features, structures, or features may be combined in one or more embodiments using any appropriate manner. Sequence numbers of the foregoing processes do not mean execution sequences in various embodiments of the present disclosure. The execution sequences of the processes should be determined according to functions and internal logic of the processes, and should not be construed as any limitation on the implementation processes of the embodiments of the present disclosure.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in the embodiments of the present disclosure, "B corresponding to A" indicates that B is associated with A, and B may be determined according to A. However, it should further be understood that determining A according to B does not mean that B is determined according to A only; that is, B may also be determined according to A and/or other information.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present disclosure.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

With descriptions of the foregoing embodiments, a person skilled in the art may clearly understand that the present disclosure may be implemented by hardware, firmware or a combination thereof. When the present disclosure is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer.

The following is used as an example but is not limited: The computer readable medium may include a random access memory (RAM), a read-only memory (ROM), an electrically erasable programmable read-only memory (EEPROM), a compact disc read-only memory (CD-ROM) or other optical disk storage, a disk storage medium or other disk storage, or any other medium that can be used to carry or store expected program code in a command or data structure form and can be accessed by a computer. In addition, any connection may be appropriately defined as a computer-readable medium.

For example, if software is transmitted from a website, a server or another remote source using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in fixation of a medium to which they belong.

For example, a disk and disc used by the present disclosure includes a compact disc (CD), a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

In summary, what is described above is merely an example of embodiments of the technical solutions of the present disclosure, but is not intended to limit the protection scope of the present disclosure. Any modification, equivalent replacement, or improvement made without departing from the principle of the present disclosure shall fall within the protection scope of the present disclosure.

## Claims

1. A method for security algorithm negotiation, comprising:
receiving, by a user equipment device, UE, a first request message from a target base station, wherein the first request message indicates the UE not to trigger a non-access stratum recovery process;
reserving, by the UE, a first key which is derived for a source base station in response to the first request message;
receiving, by the UE, a second request message from the target base station, wherein the second request message comprise an identity which is used to indicate an algorithm; and
deriving, by the UE, a second key based on the first key and the algorithm corresponding to the identity; wherein the method further comprises:
not triggering, by the UE, the non-access stratum recovery process in response to the first request message.

2. The method according to claim 1, wherein the first request message comprises a first indicator; and the method further comprises:
deleting, by the UE, security keys which are derived from the first key based on the first indicator.

3. The method according to claim 2, wherein the first indicator instructs the UE not to trigger the non-access stratum recovery process, and not triggering the non-access stratum recovery process in response to the first request message comprises:
not triggering, by the UE, the non-access stratum recovery process based on the first indicator.

4. The method according to claim 1, wherein the second request message comprises a second indicator, wherein the second indicator indicates the UE not to derive a key for the target base station; and wherein the method further comprises:
not deriving, by the UE, the key for the target base station based on the second indicator.

5. The method according to claim 1, further comprising:
sending, by the UE, a first response message to the target base station in response to the first request message.

6. The method according to claim 1, further comprising:
verifying, by the UE, the second request message;
protecting, by the UE, a second response message base on the second key and the algorithm corresponding to the identity when the second request message is verified successfully; and
sending, by the UE, the protected second response message to the target base station.

7. A method for security algorithm negotiation, comprising:
sending, by a target base station, a first request message from a user equipment device, UE, wherein the first request message indicates the UE not to trigger a non-access stratum recovery process, and the first request message instructs the UE to reserve a first key which is derived for a source base station;
sending, by the target base station, a second request message to the UE; wherein the second request message comprises an identity which is used to indicate an algorithm; and
receiving, by the target base station, a second response message from the UE.

8. The method according to claim 7, wherein the first request message comprises a first indicator; wherein the first indicator instructs the UE to delete security keys which are derived from the first key.

9. The method according to claim 8, wherein the first indicator instructs the UE not to trigger the non-access stratum recovery process.

10. A user equipment device, UE (70), comprising a receiver (73) and a processor (71);
wherein the receiver (73) is configured to receive a first request message from a target base station, wherein the first request message indicates the UE not to trigger a non-access stratum recovery process; and receive a second request message from a target base station, wherein the second request message comprise an identity which is used to indicate an algorithm; and
wherein the processor (71) is configured to not to trigger the non-access stratum recovery process in response to the first request message, reserve a first key which is derived for a source base station in response to the first request message, and deriving a second key based on the first key and an algorithm corresponding to the identity.

11. The user equipment (70) according to claim 10, wherein the first request message comprises a first indicator; and the processor is further configured to delete security keys which are derived from the first key based on the first indicator.

12. The user equipment (70) according to claim 11, wherein the first indicator instructs the UE not to trigger the non-access stratum recovery process, wherein the processor (71) is further configured to not to trigger the non-access stratum recovery process based on the first indicator.

13. The user equipment (70) according to claim 1, wherein the second request message comprises a second indicator, wherein the second indicator indicates the UE not to derive a key for the target base station; and the processor (71) is further configured to:
not to derive the key for the target base station based on the second indicator.

14. Abase station (60), comprising a transmitter (64) and a receiver (63);
wherein the transmitter (64) is configured to:
send a first request message to a user equipment device, UE, wherein the first request message indicates the UE not to trigger a non-access stratum recovery process, and the first request message instructs the UE to reserve a first key which is derived for a source base station; and
send a second request message to the UE, wherein the second request message comprises an identity which is used to indicate an algorithm; and
wherein the receiver circuit (63) is configured to:
receive a second response message from the UE.

15. The base station (60) according to claim 14, wherein the first request message comprises a first indicator; wherein the first indicator instructs the UE to delete security keys which are derived from the first key.

## Patentansprüche

1. Verfahren zur Sicherheitsalgorithmusverhandlung, das Folgendes umfasst:
Empfangen, durch eine Benutzereinrichtungsvorrichtung (user equipment device - UE) einer ersten Anforderungsnachricht von einer Zielbasisstation, wobei die erste Anforderungsnachricht der UE angibt, einen Nichtzugriffsschichtwiederherstellungsvorgang nicht auszulösen;
Empfangen, durch die UE, eines ersten Schlüssels, der für eine Quellbasisstation als Reaktion auf die erste Anforderungsnachricht abgeleitet ist;
Empfangen, durch die UE, einer zweiten Anforderungsnachricht von der Zielbasisstation, wobei die zweite Anforderungsnachricht eine Identität umfasst, die verwendet wird, um einen Algorithmus anzugeben; und
Ableiten, durch die UE, eines zweiten Schlüssels basierend auf dem ersten Schlüssel und dem Algorithmus, der der Identität entspricht; wobei das Verfahren ferner Folgendes umfasst:
Nichtauslösen, durch die UE, des Nichtzugriffsschichtwiederherstellungsvorgangs als Reaktion auf die erste Anforderungsnachricht.

2. Verfahren nach Anspruch 1, wobei die erste Anforderungsnachricht einen ersten Indikator umfasst; und das Verfahren ferner Folgendes umfasst:
Löschen, durch die UE, von Sicherheitsschlüsseln, die von dem ersten Schlüssel basierend auf dem ersten Indikator abgeleitet sind.

3. Verfahren nach Anspruch 2, wobei der erste Indikator die UE anweist, den Nichtzugriffsschichtwiederherstellungsvorgang nicht auszulösen, und wobei das Nichtauslösen des Nichtzugriffsschichtwiederherstellungsvorgangs als Reaktion auf die erste Anforderungsnachricht Folgendes umfasst:
Nichtauslösen, durch die UE, des Nichtzugriffsschichtwiederherstellungsvorgangs basierend auf dem ersten Indikator.

4. Verfahren nach Anspruch 1, wobei die zweite Anforderungsnachricht einen zweiten Indikator umfasst, wobei der zweite Indikator der UE angibt, einen Schlüssel für die Zielbasisstation nicht abzuleiten; und wobei das Verfahren ferner Folgendes umfasst:
Nichtableiten, durch die UE, des Schlüssels für die Zielbasisstation basierend auf dem zweiten Indikator.

5. Verfahren nach Anspruch 1, das ferner Folgendes umfasst:
Senden, durch die UE, einer ersten Antwortnachricht an die Zielbasisstation als Reaktion auf die erste Anforderungsnachricht.

6. Verfahren nach Anspruch 1, das ferner Folgendes umfasst:
Verifizieren, durch die UE, der zweiten Anforderungsnachricht;
Schützen, durch die UE, einer zweiten Antwortnachrichtenbasis auf dem zweiten Schlüssel und dem Algorithmus, der der Identität entspricht, wenn die zweite Anforderungsnachricht erfolgreich verifiziert wird; und
Senden, durch die UE, der geschützten zweiten Antwortnachricht an die Zielbasisstation.

7. Verfahren zur Sicherheitsalgorithmusverhandlung, das Folgendes umfasst:
Senden, durch eine Zielbasisstation, einer ersten Anforderungsnachricht von einer Benutzereinrichtungsvorrichtung (UE), wobei die erste Anforderungsnachricht der UE angibt, einen Nichtzugriffsschichtwiederherstellungsvorgang nicht auszulösen, und die erste Anforderungsnachricht die UE anweist, einen ersten Schlüssel zu reservieren, der für eine Quellbasisstation abgeleitet ist;
Senden, durch die Zielbasisstation, einer zweiten Anforderungsnachricht an die UE; wobei die zweite Anforderungsnachricht eine Identität umfasst, die verwendet wird, um einen Algorithmus anzugeben; und
Empfangen, durch die Zielbasisstation, einer zweiten Antwortnachricht von der UE.

8. Verfahren nach Anspruch 7, wobei die erste Anforderungsnachricht einen ersten Indikator umfasst; wobei der erste Indikator die UE anweist, Sicherheitsschlüssel zu löschen, die von dem ersten Schlüssel abgeleitet sind.

9. Verfahren nach Anspruch 8, wobei der erste Indikator die UE anweist, den Nichtzugriffsschichtwiederherstellungsvorgang nicht auszulösen.

10. Benutzereinrichtungsvorrichtung (UE) (70), die einen Empfänger (73) und einen Prozessor (71) umfasst;
wobei der Empfänger (73) konfiguriert ist, um eine erste Anforderungsnachricht von einer Zielbasisstation zu empfangen, wobei die erste Anforderungsnachricht der UE angibt, den Nichtzugriffsschichtwiederherstellungsvorgang nicht auszulösen; und Empfangen einer zweiten Anforderungsnachricht von einer Zielbasisstation, wobei die zweite Anforderungsnachricht eine Identität umfasst, die verwendet wird, um einen Algorithmus anzugeben; und
wobei der Prozessor (71) konfiguriert ist, um den Nichtzugriffsschichtwiederherstellungsvorgang als Reaktion auf die erste Anforderungsnachricht nicht auszulösen, einen ersten Schlüssel zu reservieren, der für eine Quellbasisstation als Reaktion auf die erste Anforderungsnachricht abgeleitet ist, und einen zweiten Schlüssel basierend auf dem ersten Schlüssel und einem Algorithmus abzuleiten, der der Identität entspricht.

11. Benutzereinrichtung (70) nach Anspruch 10, wobei die erste Anforderungsnachricht einen ersten Indikator umfasst; und der Prozessor ferner konfiguriert ist, um Sicherheitsschlüssel zu löschen, die basierend auf dem ersten Indikator von dem ersten Schlüssel abgeleitet sind.

12. Benutzereinrichtung (70) nach Anspruch 11, wobei der erste Indikator die UE anweist, den Nichtzugriffsschichtwiederherstellungsvorgang nicht auszulösen, wobei der Prozessor (71) ferner konfiguriert ist, um den Nichtzugriffsschichtwiederherstellungsvorgang basierend auf dem ersten Indikator nicht auszulösen.

13. Benutzereinrichtung (70) nach Anspruch 1, wobei die zweite Anforderungsnachricht einen zweiten Indikator umfasst, wobei der zweite Indikator der UE angibt, einen Schlüssel für die Zielbasisstation nicht abzuleiten; und der Prozessor (71) ferner zu Folgendem konfiguriert ist:
Nichtableiten des Schlüssels für die Zielbasisstation basierend auf dem zweiten Indikator.

14. Basisstation (60), die einen Sender (64) und einen Empfänger (63) umfasst;
wobei der Sender (64) zu Folgendem konfiguriert ist:
Senden einer ersten Anforderungsnachricht an eine Benutzereinrichtungsvorrichtung (UE), wobei die erste Anforderungsnachricht der UE angibt, einen Nichtzugriffsschichtwiederherstellungsvorgang nicht auszulösen, und die erste Anforderungsnachricht die UE anweist, einen ersten Schlüssel zu reservieren, der für eine Quellbasisstation abgeleitet ist; und
Senden einer zweiten Anforderungsnachricht an die UE, wobei die zweite Anforderungsnachricht eine Identität umfasst, die verwendet wird, um einen Algorithmus anzugeben; und
wobei die Empfängerschaltung (63) zu Folgendem konfiguriert ist:
Empfangen einer zweiten Antwortnachricht von der UE.

15. Basisstation (60) nach Anspruch 14, wobei die erste Anforderungsnachricht einen ersten Indikator umfasst; wobei der erste Indikator die UE anweist, Sicherheitsschlüssel zu löschen, die von dem ersten Schlüssel abgeleitet sind.

## Revendications

1. Procédé de négociation d'algorithme de sécurité, comprenant :
la réception, par un dispositif d'équipement utilisateur, UE, d'un premier message de demande provenant d'une station de base cible, le premier message de demande indiquant à l'UE de ne pas déclencher de processus de récupération de strate de non-accès ;
la réserve, par l'UE, d'une première clé qui est dérivée pour une station de base source en réponse au premier message de demande ;
la réception, par l'UE, d'un second message de demande de la station de base cible, le second message de demande comprenant une identité qui est utilisée pour indiquer un algorithme ; et
la dérivation, par l'UE, d'une seconde clé sur la base de la première clé et de l'algorithme correspondant à l'identité ; le procédé comprenant en outre :
le fait de ne pas déclencher, par l'UE, le processus de récupération de strate de non-accès en réponse au premier message de demande.

2. Procédé selon la revendication 1, dans lequel le premier message de demande comprend un premier indicateur ; et le procédé comprend en outre :
la suppression, par l'UE, des clés de sécurité qui sont dérivées de la première clé sur la base du premier indicateur.

3. Procédé selon la revendication 2, dans lequel le premier indicateur ordonne à l'UE de ne pas déclencher le processus de récupération de strate de non-accès, et le fait de ne pas déclencher le processus de récupération de strate de non-accès en réponse au premier message de demande comprend :
le fait de ne pas déclencher, par l'UE, le processus de récupération de strate de non-accès sur la base du premier indicateur.

4. Procédé selon la revendication 1, dans lequel le second message de demande comprend un second indicateur, le second indicateur indiquant à l'UE de ne pas dériver de clé pour la station de base cible ; et le procédé comprenant en outre :
le fait de ne pas dériver, par l'UE, la clé pour la station de base cible sur la base du second indicateur.

5. Procédé selon la revendication 1, comprenant en outre :
l'envoi, par l'UE, d'un premier message de réponse à la station de base cible en réponse au premier message de demande.

6. Procédé selon la revendication 1, comprenant en outre :
la vérification, par l'UE, du second message de demande ;
la protection, par l'UE, d'un second message de réponse sur la base de la seconde clé et de l'algorithme correspondant à l'identité lorsque le second message de demande est vérifié avec succès ; et
l'envoi, par l'UE, du second message de réponse protégé à la station de base cible.

7. Procédé de négociation d'algorithme de sécurité, comprenant :
l'envoi, par une station de base cible, d'un premier message de demande à partir d'un dispositif d'équipement utilisateur, UE, le premier message de demande indiquant à l'UE de ne pas déclencher de processus de récupération de strate de non-accès, et le premier message de demande ordonnant à l'UE de réserver une première clé qui est dérivée pour une station de base source ;
l'envoi, par la station de base cible, d'un second message de demande à l'UE ; le second message de demande comprenant une identité qui est utilisée pour indiquer un algorithme ; et
la réception, par la station de base cible, d'un second message de réponse de l'UE.

8. Procédé selon la revendication 7, dans lequel le premier message de demande comprend un premier indicateur ; le premier indicateur ordonnant à l'UE de supprimer les clés de sécurité qui sont dérivées de la première clé.

9. Procédé selon la revendication 8, dans lequel le premier indicateur ordonne à l'UE de ne pas déclencher le processus de récupération de strate de non-accès.

10. Dispositif d'équipement utilisateur, UE (70), comprenant un récepteur (73) et un processeur (71) ;
le récepteur (73) étant configuré pour recevoir un premier message de demande d'une station de base cible, le premier message de demande indiquant à l'UE de ne pas déclencher de processus de récupération de strate de non-accès ; et recevoir un second message de demande d'une station de base cible, le second message de demande comprenant une identité qui est utilisée pour indiquer un algorithme ; et
le processeur (71) étant configuré pour ne pas déclencher le processus de récupération de strate de non-accès en réponse au premier message de demande, réserver une première clé qui est dérivée pour une station de base source en réponse au premier message de demande, et dériver une seconde clé sur la base de la première clé et d'un algorithme correspondant à l'identité.

11. Équipement utilisateur (70) selon la revendication 10, dans lequel le premier message de demande comprend un premier indicateur ; et le processeur est en outre configuré pour supprimer les clés de sécurité qui sont dérivées de la première clé sur la base du premier indicateur.

12. Équipement utilisateur (70) selon la revendication 11, dans lequel le premier indicateur ordonne à l'UE de ne pas déclencher le processus de récupération de strate de non-accès, le processeur (71) étant en outre configuré pour ne pas déclencher le processus de récupération de strate de non-accès sur la base du premier indicateur.

13. Équipement utilisateur (70) selon la revendication 1, dans lequel le second message de demande comprend un second indicateur, le second indicateur indiquant à l'UE de ne pas dériver de clé pour la station de base cible ; et le processeur (71) étant en outre configuré pour :
ne pas dériver la clé de la station de base cible sur la base du second indicateur.

14. Station de base (60), comprenant un émetteur (64) et un récepteur (63) ;
l'émetteur (64) étant configuré pour :
envoyer un premier message de demande à un dispositif d'équipement utilisateur, UE, le premier message de demande indiquant à l'UE de ne pas déclencher de processus de récupération de strate de non-accès, et le premier message de demande ordonnant à l'UE de réserver une première clé qui est dérivée pour une station de base source ; et
envoyer un second message de demande à l'UE, le second message de demande comprenant une identité qui est utilisée pour indiquer un algorithme ; et
le circuit récepteur (63) étant configuré pour :
recevoir un second message de réponse de l'UE.

15. Station de base (60) selon la revendication 14, dans laquelle le premier message de demande comprend un premier indicateur ; le premier indicateur ordonnant à l'UE de supprimer les clés de sécurité qui sont dérivées de la première clé.
